(19)

Europäisches
Patentamt
European
Patent Office
Office européen
des brevets

(11) **EP 3 971 863 A1**

(12) **EUROPEAN PATENT APPLICATION**

(43) Date of publication:
**23.03.2022 Bulletin 2022/12**

(21) Application number: **20196688.4**

(22) Date of filing: **17.09.2020**

(51) International Patent Classification (IPC):
***G08G 1/16*** (2006.01)    ***G08G 1/14*** (2006.01)
***G08G 1/01*** (2006.01)

(52) Cooperative Patent Classification (CPC):
**G08G 1/168; G08G 1/0129; G08G 1/0133;
G08G 1/143; G08G 1/147**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Ningbo Geely Automobile Research
& Development Co. Ltd.
Hangzhou Bay New District
Ningbo 315336 (CN)**

• **Zhejiang Geely Holding Group Co., Ltd.
Zhejiang 310051 (CN)**

(72) Inventors:
• **NILSSON, Magnus
448 37 Floda (SE)**
• **LINDBERG NILSSON, Erik
417 47 Göteborg (SE)**

(74) Representative: **Zacco Sweden AB
P.O. Box 5581
114 85 Stockholm (SE)**

(54) **A METHOD FOR OPERATING A VEHICLE HAZARDOUS PARKING WARNING SYSTEM**

(57)    A method for operating a vehicle hazardous parking warning system for warning a user of a first vehicle (21) about hazardous parking of the first vehicle (21). The method comprises detecting that the first vehicle (21) enters a parking state at a parking position (24) along the roadside. The method further comprises determining whether the parking position (24) of the first vehicle (21) is hazardous in terms of risk that the parked first vehicle (21) being hit by a second, rear-coming, vehicle (22) by retrieving stored forwards visibility information that was registered by at least one forwards directed sensor unit (10) of the first vehicle (21) while travelling of the first vehicle (21) before the first vehicle (21) entered the parking state at the parking position (24), wherein the retrieved forwards visibility information include information about visibility of the parking position (24) of the first vehicle (21); calculating a level of a risk parameter reflecting a risk for the parked first vehicle (21) being hit by a second, rear-coming, vehicle (22), based on the retrieved forwards visibility information; and determining that the parking position (24) is a hazardous parking position when said level of said risk parameter exceeds a threshold value. Finally, the method comprises activating a warning feature for warning the user of the first vehicle (21) about hazardous parking in response to determined hazardous parking position.

FIG.2A

EP 3 971 863 A1

**Description**

TECHNICAL FIELD

The present disclosure relates to a method for operating a vehicle hazardous parking warning system for warning a user of a first vehicle about hazardous parking of the first vehicle. The disclosure further relates to a corresponding vehicle hazardous parking warning system.

The method and system for operating a vehicle hazardous parking warning system according to the disclosure can be arranged in a vehicle or a handheld computing device carried by a user of the vehicle. Moreover, even if the method and system according to the disclosure will be described primarily in relation to a car, the method and system is not restricted to this particular vehicle, but may as well be installed or implemented in another type of vehicle, such as a truck, a bus, a motorcycle or the like.

BACKGROUND

In the field of vehicle hazardous parking warning system for warning a user of a first vehicle about hazardous parking of the first vehicle along a roadside, it is known for example from US 9,987,981 B1 to provide the first vehicle with a rearwards looking radar detection device, and to trigger an alarm when a vehicle approaching from behind the first vehicle enters a work zone around the stationary first vehicle.

However, there are certain disadvantages with this type of prior art solutions, in particular in terms short reaction time from warning to potential collision, but also in terms of detection range, accuracy and reliability.

There is thus a need for an improved method for operating a vehicle hazardous parking warning system, and corresponding system, that provides increased reaction time from warning to potential collision, as well as improved detection accuracy and reliability.

SUMMARY

An object of the present disclosure is to provide a method for operating a vehicle hazardous parking warning system, and corresponding system, where the previously mentioned problems are avoided. This object is at least partly achieved by the features of the independent claims.

According to a first aspect of the present disclosure, there is provided a method for operating a vehicle hazardous parking warning system for warning a user of a first vehicle about hazardous parking of the first vehicle. The method comprises: detecting that the first vehicle enters a parking state at a parking position along the roadside, and determining whether the parking position of the first vehicle is hazardous in terms of risk that the parked first vehicle being hit by a second, rear-coming, vehicle by:

- retrieving stored sensor data that was registered by at least one sensor unit associated with the first vehicle or a third vehicle while travelling a road stretch leading up to the parking position, wherein the retrieved sensor data reflects visibility of the parking position of the first vehicle; calculating a level of a risk parameter reflecting a risk for the parked first vehicle being hit by a second, rear-coming, vehicle based on the retrieved sensor data; and determining that the parking position is a hazardous parking position when said level of said risk parameter exceeds a threshold value, and/or

- retrieving geographic information identifying areas of dangerous parking; calculating a level of a risk parameter reflecting a risk for the parked first vehicle being hit by a second, rear-coming, vehicle based on the retrieved geographic information and the parking position of the first vehicle; and determining that the parking position is a hazardous parking position when said level of said risk parameter exceeds a threshold value; and

activating a warning feature for warning the user of the first vehicle about hazardous parking in response to determined hazardous parking position.

According to a second aspect of the present disclosure, there is provided a vehicle hazardous parking warning system for warning a user of a first vehicle about hazardous parking of the first vehicle. The warning system comprises: a first sensor for detecting when the first vehicle enters a parking state at a parking position along the roadside, a warning output device, in particular a display, light signal device, vibration device, loudspeaker and/or mobile electronic device associated with the user, for outputting a warning signal or warning message, and an electronic control system. The electronic control system is configured for receiving input data from the first sensor and for activating a warning feature by the warning output device for warning the user of the first vehicle about hazardous parking in response to determined hazardous parking position,

- wherein the warning system further comprises at least one sensor unit associated with the first vehicle or a third vehicle, wherein the electronic control system is further configured for determining whether the parking position of the first vehicle is hazardous in terms of risk that the parked first vehicle being hit by a second, rear-coming, vehicle by: retrieving stored sensor data that was registered by the at least one sensor unit associated with the first vehicle or the third vehicle while travelling a road stretch leading up to the parking position, wherein the retrieved sensor data reflects visibility of the parking position of the first vehicle; calculating a level of a risk parameter reflecting a risk for the parked first vehicle being hit by a second, rear-coming, vehicle based on the retrieved sensor data; and determining that the parking position is a hazardous parking position when said level of said risk parameter exceeds a threshold value, and/or

- wherein the electronic control system is configured for determining whether the parking position of the first vehicle is hazardous in terms of risk that the parked first vehicle being hit by a second, rear-coming, vehicle by: retrieving geographic information identifying areas of dangerous parking, calculating a level of a risk parameter reflecting a risk for the parked first vehicle being hit by a second, rear-coming, vehicle based on the retrieved geographic information and the parking position of the first vehicle; and determining that the parking position is a hazardous parking position when said level of said risk parameter exceeds a threshold value.

In this way, it becomes possible make a risk evaluation for determining the risk that the stationary first vehicle may be hit by a second, rear-coming, vehicle, immediately upon entering the parking state and thus often before a second vehicle is coming close to the first vehicle, thereby typically enabling a significant increase in reaction time from warning to potential collision, such that the vehicle user, vehicle control system and/or vehicle autonomous driving system has time to for example actuate vehicle external warning lights, move the vehicle to a more safe parking position, evacuate the vehicle, putting out a warning triangle for altering other road drivers, etc.

Moreover, since the risk evaluation according to the disclosure is independent from detection range of a stationary rearwards-looking radar detector, detection range, accuracy and reliability is increased, because more remote information about forwards visibility, sensor data reflecting curvature and slope, road map data including forwards visibility information or road curvature data and road slope, or geographic information identifying areas of dangerous parking, may be easily obtained.

In other words, by making an estimation of the visibility of the first vehicle, as experienced by a user and/or driving system of second rear-coming vehicle upon approaching the first vehicle from behind, a reliable and accurate risk assessment for evaluating the risk for a collision between the stationary first vehicle and approaching second vehicle may be made.

Further advantages are achieved by implementing one or several of the features of the dependent claims.

In some example embodiments, the stored sensor data was registered by at least one forwards directed sensor unit of the first vehicle while travelling the road stretch leading up to the parking position and before the first vehicle entered the parking state at the parking position, wherein the retrieved sensor data corresponds to forwards visibility information reflecting visibility of the parking position of the first vehicle. Thereby, the visibility of the stationary first vehicle, as perceived by a driver or driving system of a rear-coming second vehicle, may be accurately and reliably estimated.

In some example embodiments, the stored sensor data was registered by a set of sensor units associated with the first vehicle while travelling the road stretch leading up to the parking position and before the first vehicle entered the parking state at the parking position, wherein the retrieved sensor data corresponds to curvature and/or slope data of said road stretch. Thereby, a cost-efficient system for estimating the visibility of the stationary first vehicle, as perceived by a driver or driving system of a rear-coming second vehicle, may be provided, because it typically requires less sophisticated sensors and less computational effort for evaluating compared with use of a forwards directed sensor.

In some example embodiments, the stored sensor data was registered by at least one sensor unit associated with the third vehicle while travelling the road stretch leading up to the parking position, wherein the retrieved sensor data corresponds to forwards visibility information reflecting visibility of the parking position of the first vehicle or curvature and/or slope data of said road stretch. Thereby, also vehicles lacking the necessary hardware for performing the required sensor data collection themselves may exploit and benefit from the method and system for operating a vehicle hazardous parking warning system for warning a user of a first vehicle about hazardous parking of the first vehicle.

In some example embodiments, the road stretch leading up to the parking position, i.e. the road stretch travelled by the first vehicle shortly before arriving at the parking position, corresponds to a road stretch extending not more than 2000 metres, specifically not more than 1000 metres, prior to the parking position of the first vehicle. Thereby, the data volume relating to sensor data may be limited without losing relevant data.

In some example embodiments, the retrieved forwards visibility information or retrieved sensor data corresponds to forwards visibility information or sensor data that was registered and stored not more than five minutes, specifically within a range of 3 - 60 seconds, prior to detecting that the first vehicle entered the parking state at a parking position along the roadside. Thereby, the data volume relating to visibility information or sensor data may be limited without losing relevant data.

In some example embodiments, the retrieved forwards visibility information or retrieved sensor data corresponds to forwards visibility information or sensor data that was registered and stored not more than 2000 metres, specifically not more than 1000 metres, prior to the parking position along the roadside. Thereby, the data volume relating to visibility information or sensor data may be limited without losing relevant data.

In some example embodiments, the risk parameter reflecting a risk for the parked first vehicle being hit by a second, rear-coming, vehicle, is any of, or a combination of: risk assessment score value; estimated distance to the parking position of the first vehicle when coming into visual range of the parked first vehicle, as experienced by a second, rear-coming, vehicle, or driver thereof; and estimated time period from detecting the parked first vehicle until arriving at the parked first vehicle, as experienced by a second, rear-coming, vehicle, or driver thereof. Each of these three alternative options provide a reliable and easily implemented method for evaluating level of risk.

In some example embodiments, the sensors of the set of sensor units are installed within the first vehicle or the third vehicle, or within a mobile electronic device, such as a smartphone, located within the first vehicle or the third vehicle, wherein the retrieved sensor data corresponding to curvature and/or slope data of said road stretch include: sensor data indicating road curvature, in particular steering wheel angular position data, vehicle lateral acceleration data, steering rack position data of a power steering system, wheel suspension data, and/or gyro data; sensor data indicating road slope, in particular vehicle pitch angle data, propulsion motor torque output data, or vertical acceleration data; and sensor data indicating vehicle speed or position, in particular wheel rotational speed data, propulsion motor rotational speed data, or GPS data; wherein the sensors of the set of sensor units are installed within the first vehicle or within a mobile electronic device, such as smartphone, located within the first vehicle. Hence, a large variety of possible solutions for obtaining the desired curvature and slope data is provided.

In some example embodiments, the step of activating a warning feature for warning the user of the first vehicle about hazardous parking involves any of, or a combination of: activating a visual and/or audio warning signal; or transmitting a voice warning message via a display and/or a loudspeaker; wherein said warning signal or warning message is outputted via a warning output device, in particular a display, light signal device, vibration device and/or loudspeaker, located within the first vehicle or via a mobile electronic device, such as a smartphone, associated with a user of the first vehicle. A suitable warning feature, taking each specific implementation into account, may be selected.

In some example embodiments, the step of activating a warning feature for warning the user of the first vehicle about hazardous parking additionally involves providing a recommended action to the user of the first vehicle, wherein the recommended action relates to any of, or a combination of: moving the first vehicle away from the current parking position; evacuating the first vehicle; setting out warning device for warning a driver or driving system of the second, rear-coming, vehicle about the parked first vehicle; wherein said recommended action is outputted via a display and/or loudspeaker located within the first vehicle or via a mobile electronic device, such as a smartphone, associated with a user of the first vehicle. Thereby, assistance is provided to the user for quickly reducing the risk for collision.

In some example embodiments, the step of calculating the level of the risk parameter additionally takes one or more of the following aspects are taken into account: road or road lane width at the parking position; portion of road or road lane width that is blocked by the first vehicle at the parking position; road speed limit at the parking position and/or on the road stretch leading up to the parking position; foggy weather condition at the parking position and/or on the road stretch leading up to the parking position; precipitation condition at the parking position; sunlight, in particular incident angle of sunlight relative to the orientation of the road stretch leading up to the parking position; outdoor light condition at the parking position; road grip at the parking position; traffic intensity at the parking position; and/or vehicle detectability by a driver or driving system of the second, rear-coming, vehicle. Thereby, additional accuracy and reliability in terms of estimating the risk for collision is accomplished.

In some example embodiments, the method further comprises, in response to determined hazardous parking position, when the first vehicle is operating in an autonomous driving mode, controlling the vehicle to drive away from the parking position. Thereby, the driving system acts for quickly reducing the risk for collision.

In some example embodiments, the method further comprises monitoring vehicle speed and determining that the first vehicle is entering the parking state at a parking position along the roadside when the vehicle speed is lower than a threshold value, in particular when the vehicle speed is zero. Thereby, a reliable detection of parking state is accomplished for avoiding undesired alarm in a non-parking situation.

In some example embodiments, the at least one forwards directed sensor unit is any of, or a combination of, an image sensor unit, a radar sensor unit, a LIDAR sensor unit.

In some example embodiments, the at least one sensor unit corresponds to at least one forwards directed sensor unit of the first vehicle, wherein the electronic control system is configured for determining whether the parking position of the first vehicle is hazardous in terms of risk that the parked first vehicle being hit by a second, rear-coming, vehicle by: retrieving stored sensor data that was registered by the at least one forwards directed sensor unit while travelling the road stretch leading up to the parking position, wherein the retrieved sensor data corresponds to forwards visibility information reflecting visibility of the parking position of the first vehicle.

In some example embodiments, the at least one sensor unit corresponds to a set of sensor units associated with the first vehicle, wherein the electronic control system is configured for determining whether the parking position of the first vehicle is hazardous in terms of risk that the parked first vehicle being hit by a second, rear-coming, vehicle by: retrieving stored sensor data that was registered by the set of sensor units while travelling the road stretch leading up to the parking position, wherein the retrieved sensor data corresponds to curvature and/or slope data of said road stretch.

In some example embodiments, the at least one sensor unit corresponds to at least one forwards directed sensor unit of the third vehicle or a set of sensor units associated with the third vehicle, wherein the electronic control system is configured for determining whether the parking position of the first vehicle is hazardous in terms of risk that the parked first vehicle being hit by a second, rear-coming, vehicle by: retrieving stored sensor data that was registered by the sensor unit or set of sensor units while travelling the road stretch leading up to the parking position, wherein the retrieved sensor data corresponds to forwards visibility information reflecting visibility of the parking position of the first vehicle or curvature and/or slope data of said road stretch.

The disclosure also relates to a vehicle or a mobile electronic device, such as a smartphone, comprising the warning system described above.

The disclosure also relates to a computer program comprising instructions, which, when the program is executed by a computer, cause the computer to carry out the steps of the method as described above.

The disclosure also relates to a computer-readable storage medium comprising instructions which, when executed by a computer, cause the computer to carry out the steps of the method as described above.

Further features and advantages of the invention will become apparent when studying the appended claims and the following description. The skilled person in the art realizes that different features of the present disclosure may be combined to create embodiments other than those explicitly described hereinabove and below, without departing from the scope of the present disclosure.

BRIEF DESCRIPTION OF DRAWINGS

The disclosure will be described in detail in the following, with reference to the attached drawings, in which

Fig. 1A-1 B    show schematically a side view of the driving scenario that is intended to be avoided,

Fig. 2A-2B    show schematically the system according to the disclosure implemented in a vehicle or smartphone, respectively,

Fig. 3    shows schematically the basic steps of the method according to the disclosure,

Fig. 4A-4C    show schematically more details of a first example embodiment of the method and system according to the disclosure,

Fig. 5A-5B    show schematically alternative options for determining visible range along a road using an image sensor,

Fig. 6A-6E    show schematically one example embodiment for determining forwards visibility range of a certain parking position,

Fig. 7A-7C    show schematically more details of a further example embodiment of the method and system according to the disclosure,

Fig. 8A-8C    show schematically more details of still a further example embodiment of the method and system according to the disclosure,

Fig. 9    shows schematically how sensor data may be gather by a third vehicle and subsequently being provided to the first vehicle,

Fig. 10A-10    Cshow schematically more details of still a further example embodiment of the method and system according to the disclosure,

Fig. 11    shows schematically a road map having dangerous parking areas mapped thereto,

Fig. 12-15    show schematically various different lateral positions of the first vehicle on the road, and

Fig. 16    shows schematically a modified version of the example embodiment described with reference to fig. 4C.

DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

The present disclosure relates to a method for operating a vehicle hazardous parking warning system for warning a user of a first vehicle about hazardous parking of the first vehicle in terms of being hit by a second, rear-coming, second vehicle, i.e. a rear-end collision scenario. The hazard of being hit by a second vehicle is specifically relevant when the first vehicle is stillstanding or parking along a road side of a highway, motorway, rural road, country road or similar types of road, where a parked or stillstanding vehicle along the road side is unexpected, and where there is maybe not sufficient space for completely driving off the normal driving lane, or even the breakdown lane or shoulder of the road if available, in case of coming to undesirable vehicle stillstand or parking, for example due to breakdown, low fuel, low battery charge, driver health problem, or the like.

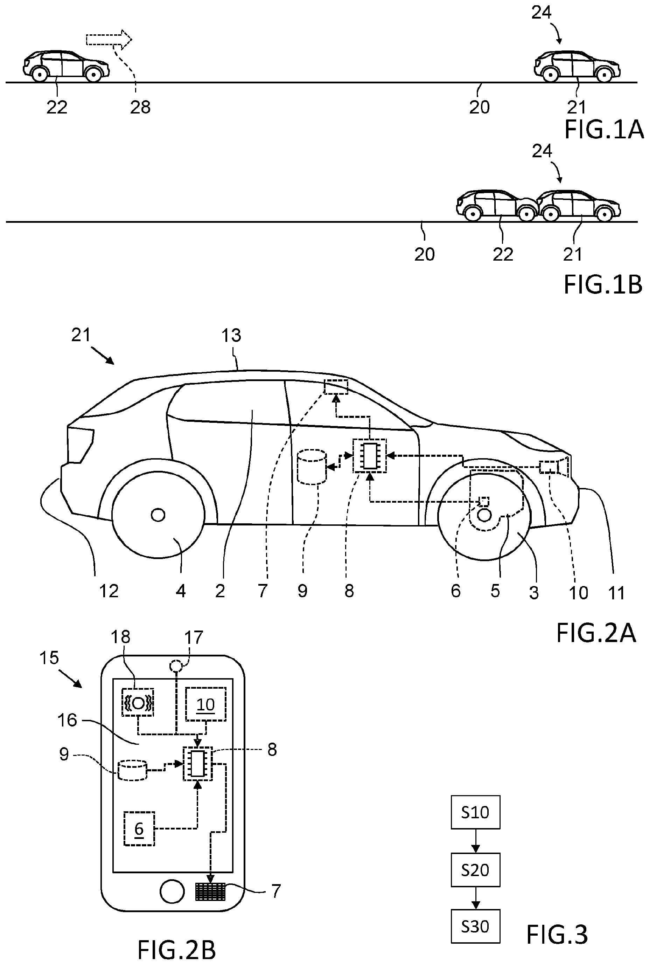

Merely for illustrating a typical rear-end collision scenario, figure 1A shows a stationary first vehicle 21 having entered a parking state at a parking position 24 along a road side of a road 20, for example due to some type of emergency breakdown or the like. Figure 1A also shows a second, rear-coming, vehicle 22 approaching the first vehicle 21 from the rear side, as indicated by the arrow 28, and typically driving at a speed limit of the specific road, such as for example in the range 70 -130 km/h. If the first vehicle is not detected by the user, driver or driving assistance system of the second vehicle 22 until shortly before arriving at the first vehicle 21, the risk for a rear-end collision, as schematically illustrated in figure 1B, is high, because the user, driver or driving assistance system of the second vehicle 22 then has relatively short time to react for avoiding a rear-end collision.

One purpose of the method for operating a vehicle hazardous parking warning system, and corresponding system, according to the disclosure, is thus to evaluate the risk for a rear-end collision in case of entering a parking state of a first vehicle 21, and for warning a user of a first vehicle 21 about hazardous parking of the first vehicle in terms of being hit by a second, rear-coming, second vehicle 22 if deemed necessary or beneficial in view of said risk.

The method and system according to the disclosure will be described primarily in relation to a car. Therefore, for setting the method and system according to the disclosure in a context, figure 2A shows an example embodiment of the vehicle hazardous parking warning system arranged in relation to the first vehicle 21 in form of a car having a passenger compartment 2, a front end 11, a rear end 12 a roof 13, front wheels 3, rear wheels 4 and a propulsion motor 5, such as an electric machine or a combustion engine, that drivingly connected with the front and/or rear wheels 3, 4.

Figure 2A also schematically shows some basic part of an example embodiment of the vehicle hazardous parking warning system comprising a first sensor in form of a wheel speed 6 for detecting when the first vehicle enters a parking state, a warning output device 7, such as for example an electronic display, a light signal device, a vibration device, a loudspeaker and/or smartphone associated with a user of the vehicle, for outputting a warning signal or warning message to the user, and an electronic control system 8 having one or more processors and configured for receiving input data from the first sensor 6 and for activating a warning feature by the warning output device 7 for warning the user of the first vehicle about hazardous parking in response to determined hazardous parking position.

In the example embodiment of figure 2A, the vehicle hazardous parking warning system additionally comprises a data memory 9 for storing one or more programs that perform the steps, services and functions associated with the method for operating a vehicle hazardous parking warning system when executed by the one or more processors.

In the example embodiment of figure 2A, the vehicle hazardous parking warning system further comprises a forwards directed sensor unit 10, for example in of an image sensor unit, a radar sensor unit, a LIDAR sensor unit, or the like, that is suitable for detecting forwards visibility of the first vehicle, i.e. that visibility range and scope of a user driving the first vehicle or a vehicle driving assistance system. The forwards directed sensor unit 10 is forward looking and may for example be located at a front end 11 of the first vehicle 21, adjacent the front windscreen or on a roof 13 of the vehicle. The method and system according to the disclosure may however in some example embodiments be implemented without such a forwards directed sensor unit 10.

The vehicle hazardous parking warning system according to the disclosure may be permanently implemented in the first vehicle 21, i.e. the parts of the system, such as the electronic control system 8, the first sensor 6 and the warning output device 7, may be permanently mounted or installed within the first vehicle 21. Alternatively, as schematically showed in figure 2B, the vehicle hazardous parking warning system may be permanently implemented in a mobile electronic device, such as a smartphone 15 or tablet computer or smartwatch, or the like. In other words, the parts of the system, such as the electronic control system 8, the first sensor 6 in form of for example a GPS receiver, and the warning output device 7, may be permanently mounted or installed within a smartphone 15 or similar type a portable electronic communication device. The smartphone 15 typically includes an electronic display 16, a camera 17 that may be used as registering forwards visibility information of the first vehicle, and/or an internal acceleration sensor unit 18 that may be used for registering sensor data reflecting curvature and slope of the road or driving path of the first vehicle 21.

With reference to figure 3, the main steps of the method for operating the vehicle hazardous parking warning system for warning a user of the first vehicle 21 about hazardous parking of the first vehicle 21 comprises a first main step S10 of detecting that the first vehicle 21 enters a parking state at a parking position along the roadside, a second main step S20 of determining whether the parking position of the first vehicle 21 is hazardous in terms of risk that the parked first vehicle 21 being hit by a second, rear-coming, vehicle 22, and a third main step S30 of activating a warning feature for warning the user of the first vehicle 21 about hazardous parking in response to determined hazardous parking position.

The first main step S10 of detecting that the first vehicle 21 enters a parking state at a parking position along the roadside, may for example involve monitoring speed of the first vehicle and determining that the first vehicle is entering the parking state at a parking position along the roadside when the speed of the first vehicle is lower than a threshold value, in particular when the speed of the first vehicle is zero. Vehicle speed may for example be detected by means of a first sensor 6, such as for example a wheel rotational speed sensor, a propulsion motor rotational speed sensor, a GPS receiver, or the like.

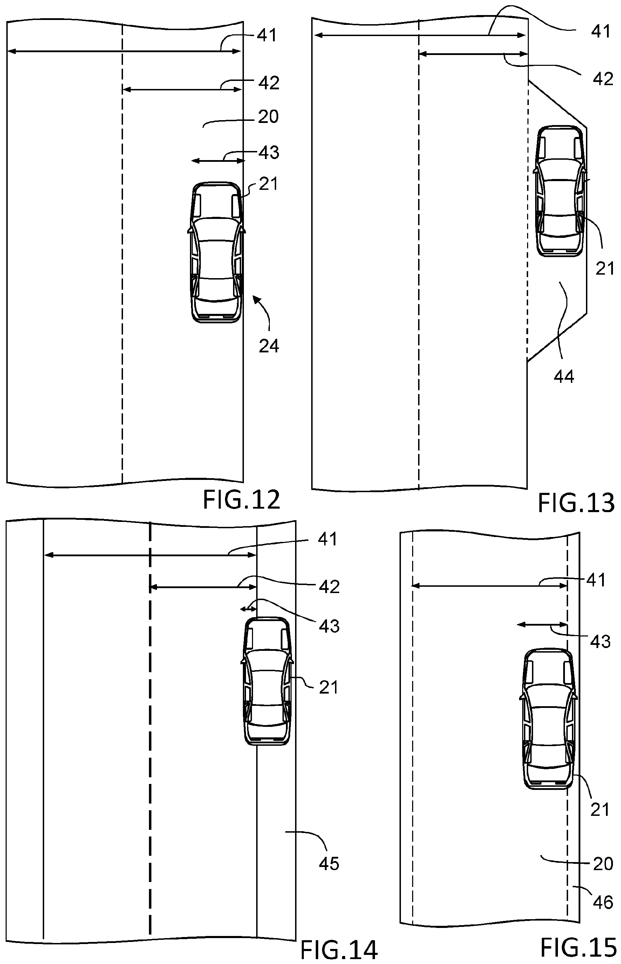

However, various additional aspects may be taken into account for increasing the reliability and accuracy of the parking state assessment. For example, the first step S10 of the method may additionally involve monitoring a sideways position of the first vehicle relative to the road or road lane. A position of the first vehicle near a road side of the road, i.e. offset towards the road side, as illustrated in figure 12, indicates that the first vehicle indeed has entered the parking state, because it indicated that the user or vehicle driving system has consciously steered the first vehicle towards the road side. On the other hand, location of the first vehicle at a central position on the road or road lane does not necessarily indicate not having entered the parking state. The first vehicle may for example have temporarily stopped for another reason, such as traffic queuing, traffic lights, road crossing, etc., and the driver and/or passengers of the first vehicle may nevertheless benefit from being warned about hazardous parking also in such scenarios. A driving scenario involving a vehicle slowdown of vehicle stop due to traffic queuing, traffic lights, road crossing, etc. may often be determined by means of image recognition of image sensor data collected by an image sensor of the first vehicle, and/or LI DAR sensor of the first vehicle and/or radar sensor of the first vehicle. Detection of sideways position of the first vehicle relative to the road or road lane may for example be performed by an image detector, e.g. a camera, which detects the position of the road lines or road lane lines relative to the first vehicle.

Furthermore, the driving environment of the first vehicle may also be used for increasing the reliable and accurate detection of whether the first vehicle 21 has entered a parking state at a parking position along the roadside, or not. For example, temporary vehicle stillstand or slow driving is common when driving in an urban environment, for example due to vehicle queuing, traffic jams, traffic lights, road crossing, etc. may be deemed not having entered the parking state, because the risk for being hit by a fast approaching second vehicle from the rear due to dangerous first parking position is then often relatively low. On the other hand, temporary vehicle stillstand or slow driving is rather uncommon when driving in a more rural environment, or on a highway, or the like. Consequently, vehicle stillstand or slow driving in a more rural environment may therefore indicate having entered the parking state, because the risk for being hit by a fast approaching second vehicle from the rear due to dangerous first parking position is larger. The driving environment of the first vehicle may for example be determined by obtaining the geographical position of the first vehicle, for example by a GPS receiver, and mapping the position of the first vehicle with road map data. Alternatively, or in combination with GPS receiver, the driving environment may be derived by image recognition of image sensor data collected by an image sensor of the first vehicle. For example, a vehicle queuing situation may generally be detected by a forwards directed camera or radar or LIDAR detector. Still more alternatively, or in combination with the other indicators described above, road speed limit may be used for determine city or urban driving environment, i.e. for indicating whether a slow down or stop of the first vehicle 21 should be classified as first vehicle 21 entering the parking state.

Other indicators that indicate that the first vehicle has entered the parking state and that may be used for improved detection of vehicle parking state are for example when the user leaves the vehicle or leaves the vehicle seat, or when a vehicle key is leaving the vehicle or is removed from a dedicated key slot within the vehicle. These various situations may be detected by a passenger compartment sensor, seat sensor, etc.

In addition, engine shut-down or parking brake activation are further indicators that indicate that the first vehicle has entered the parking state.

The third main step S30 of activating a warning feature for warning the user of the first vehicle 21 about hazardous parking in response to determined hazardous parking position may for example involves any of, or a combination of, activating a visual and/or audio warning signal, or transmitting a voice warning message via a display and/or a loudspeaker. In particular, said visual and/or audio warning signal or warning message is outputted via the warning output device 7, in particular a display, light signal device, vibration device and/or loudspeaker, located within the first vehicle or via a smartphone associated with, e.g. carried by, owned by, lent to, a user of the first vehicle.

Furthermore, third main step S30 of activating a warning feature for warning the user of the first vehicle about hazardous parking may additionally involve providing a recommended action to the user of the first vehicle 21, wherein the recommended action relates to any of, or a combination of: moving the first vehicle away from the current parking position; evacuating the first vehicle; setting out warning device for warning a driver or driving system of the second, rear-coming, vehicle about the parked first vehicle. Said recommended action may for example be outputted via a display and/or loudspeaker located within the first vehicle or via a smartphone associated with a user of the first vehicle 21.

Also, the method may further comprise a fourth main step of controlling the first vehicle 21 to drive away from the parking position in response to determined hazardous parking position, when the first vehicle 21 is operating in an autonomous driving mode. In other words, if the first vehicle 21 comes to halt at a parking position along the roadside for any reason, such as emergency breakdown or user command, while driving in an autonomous driving mode, an autonomous driving system of the first vehicle 21 may be configured for operating the first vehicle 21 for leaving the hazardous parking position and driving to a new, more safe, parking position.

The second main step S20 of determining whether the parking position of the first vehicle 21 is hazardous in terms of risk that the parked first vehicle 21 being hit by a second, rear-coming, vehicle 22, may be performed in various alternatives ways.

For example, according to some example embodiments of the disclosure, said second main step S20 may involve performing a first substep of retrieving stored sensor data that was registered by at least one sensor unit 10 associated with the first vehicle 21 or a third vehicle while travelling a road stretch leading up to the parking position 24, wherein the retrieved sensor data reflects visibility of the parking position 24 of the first vehicle 21. The second main step S20 may additionally involve performing a second substep of calculating a level of a risk parameter reflecting a risk for the parked first vehicle 21 being hit by a second, rear-coming, vehicle 22, based on the retrieved sensor data. Moreover, the second main step S20 may involve performing a third substep of determining that the parking position 24 is a hazardous parking position 24 when said level of said risk parameter exceeds a threshold value.

In other words, the retrieved sensor data was registered by at least one sensor unit 10 associated with the first vehicle 21 itself a short time period before the first vehicle 21 entered the parking state, such as for example sensor data registered during the most recent 60 or 120 seconds before entering the parking state, or the like. Thereby, the retrieved sensor data is collected while driving the road stretch leading up to the parking position 24 and may be used for estimating the visibility of the parking position 24 of the first vehicle 21, as experienced when driving along said road stretch towards the parking position 24. Consequently, the retrieved sensor data may be used for estimating the visibility of the parking position 24 as perceived by a driver or driving system of a vehicle approaching the parking position 24 from behind of the first vehicle 24.

Alternatively, or in combination with above, the retrieved sensor data may have been registered by at least one sensor unit 10 associated with a third vehicle while travelling a road stretch leading up to the parking position 24, wherein the sensor data captured by the third vehicle was shared with the first vehicle 21 for enabling estimation of the visibility of the parking position 24 of the first vehicle 21, as experienced or perceived when driving along said road stretch towards the parking position 24.

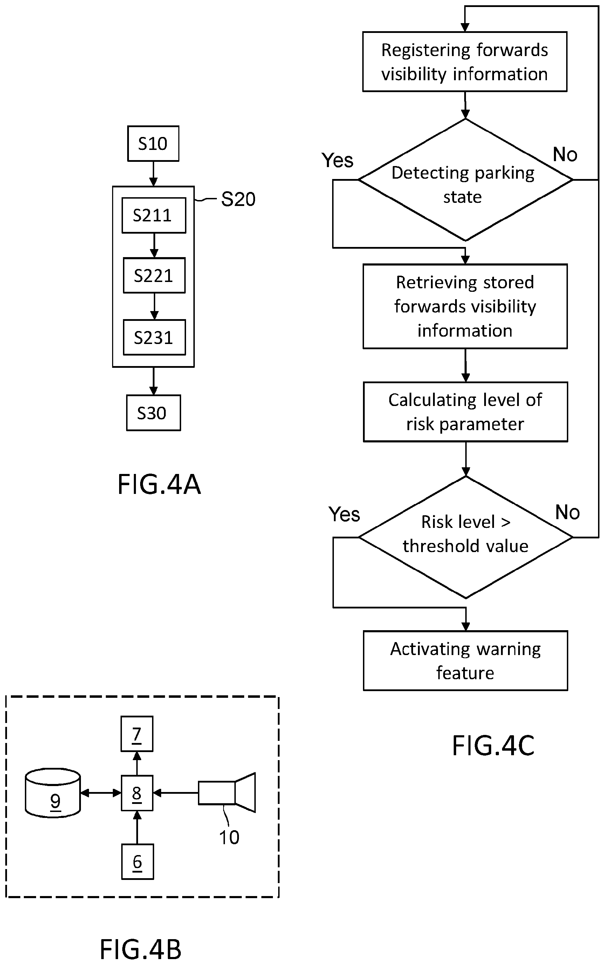

Furthermore, one example embodiment of how to perform the second main step S20 of determining whether the parking position of the first vehicle 21 is hazardous in terms of risk that the parked first vehicle 21 being hit by a second, rear-coming, vehicle 22 is described more in detail below with reference to figure 4A, and the corresponding system is described with reference to figure 4B. Specifically, said second main step S20 may involve performing a first substep S211 of retrieving stored sensor data that was registered by at least one forwards directed sensor unit 10 of the first vehicle 21 while travelling the road stretch leading up to the parking position 24 and before the first vehicle 21 entered the parking state at the parking position 24, wherein the retrieved sensor data corresponds to forwards visibility information reflecting visibility of the parking position 24 of the first vehicle 21. The second main step S20 may additionally involve performing a second substep S221 of calculating a level of a risk parameter reflecting a risk for the parked first vehicle 21 being hit by a second, rear-coming, vehicle 22, based on the retrieved forwards visibility information. Moreover, the second main step S20 may involve performing a third substep S231 of determining that the parking position 24 is a hazardous parking position 24 when said level of said risk parameter exceeds a threshold value.

As mentioned above, the forwards visibility information is thus more or less continuously registered while travelling of the first vehicle 21 using for example an image sensor, a radar sensor or a LIDAR sensor, or a combination thereof, and the registered forwards visibility information is more or less continuously stored in a data storage 9 for access thereof at a later time point in the near future.

Since only forwards visibility information at a road stretch located directly behind the first vehicle 21, e.g. about 5 - 1500 metres along the road behind the first vehicle 21, is relevant for determining the risk for being hit by a rear-coming second vehicle 22, forwards visibility information older than about 30 seconds is typically not relevant and may be overwritten/deleted while driving.

Alternatively, the retrieved forwards visibility corresponds to: information or data that was registered and stored not more than five minutes, specifically within a range of 3 - 60 seconds, prior to detecting that the first vehicle entered the parking state at a parking position along the roadside; or information or data that was registered and stored not more than 2000 metres, specifically not more than 1000 metres, prior to the parking position along the roadside. These two options also ensure that only relevant forwards visibility information is retrieved and processed, thereby avoiding unnecessary computational effort.

The underlying idea of this example embodiment of the disclosure is to evaluate the forwards visibility information as experienced and detected by the first vehicle 21 when driving along the road, and assuming that a rear-coming second vehicle 22 experiences approximately the same condition as the first vehicle 21 experienced shortly before, and thereby being able to make a qualified estimation of at which distance from the first vehicle 21 the user, driver or driving system of the rear-coming second vehicle 22 will detect the first vehicle 21 when parking at the parking position. In other words, the basic concepts of this example embodiment of the disclosure is to determine the visual or detectable range to parking position 24 as measured from the position at which the parking position 24 enters the visual or detectable range of the image sensor, radar sensor, a LIDAR sensor, or the like, of the first vehicle 21.

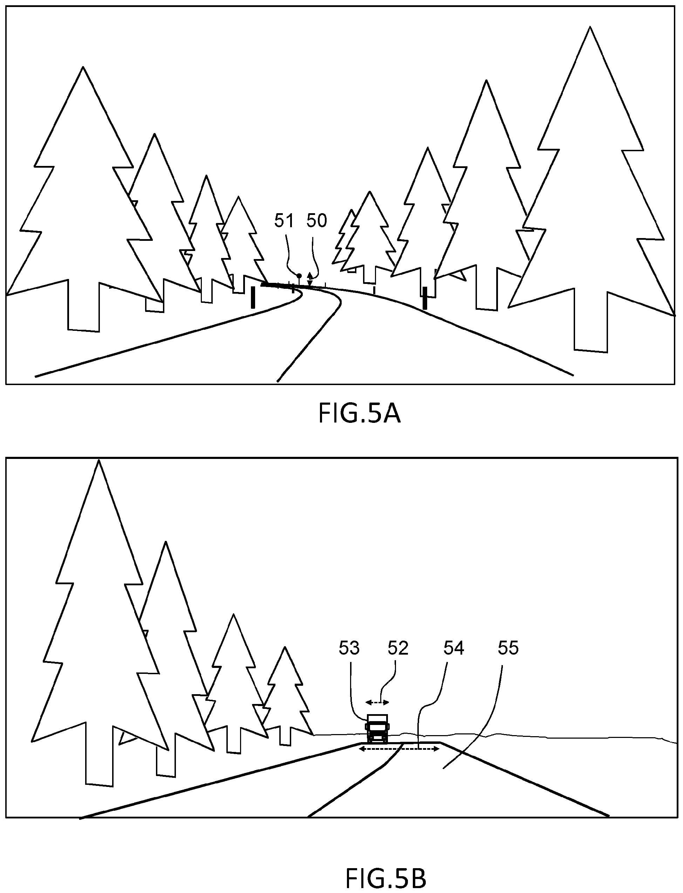

Visual range detection by radar and LIDAR sensors may for example be performed by identifying the parking position 24 in a received radar or LIDAR image by image recognition and subsequently calculating the range by the equation $Range = \frac{Speed\ of\ light\ x\ Time\ of\ flight}{2}$. Visual range detection by image sensor may for example be performed by measuring size of an object in pixels or the like and determine the range thereto be by comparing with a known real size of that object, such as a the height 50 of a normal traffic sign 51, as schematically illustrated in figure 5A, or the width 52 of a normal truck 53, or the width 54 or a rural road 55, as schematically illustrated in figure 5B.

Consequently, the registered and stored and subsequently retrieved forwards visibility information include information relating to a distance between the parking position 24 and the position of the first vehicle 21 when first coming into visual range of the parking position 24.

The term forwards visibility information may thus be deemed relating to forwards visibility range information, i.e. how far ahead on the road a user, driver or vehicle driving system may see and detect a stationary vehicle.

A certain adjustment of said distance may be performed for adopting to the assumed vehicle configuration of the second vehicle 22. For example, if for example the second vehicle is driven by a user, the visibility or detection range of said user may differ from the detection range of an image sensor, radar sensor or LIDAR sensor, or the like.

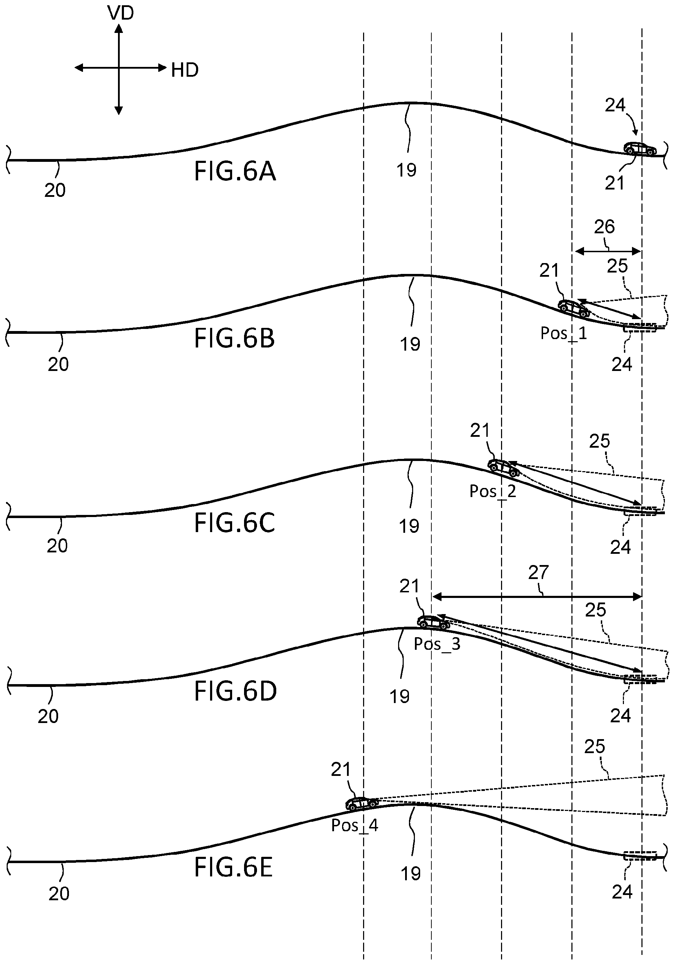

The above-disclosed concept will be described more in detail with reference to figures 6A-6E, which schematically show the first vehicle 21 at various positions while driving towards the parking position 24, and the associated visibility range 25 as experienced by the user, driver or driving system of the first vehicle 21 at each respective position.

Specifically, figure 6A represents a time point at which the first vehicle 21 has entered a parking state along the roadside of a road 20 for any reason, such as for example an emergency breakdown. The illustrated part of the road 20, as seen from a sideview, has a substantially flat road stretch, i.e. essentially parallel with a horizontal direction HD, followed by a road crest 19, as seen in a vertical direction VD.

When performing the method for operating the vehicle hazardous parking warning system for warning a user of a first vehicle about hazardous parking of the first vehicle according to the disclosure, the electronic control system 8 retrieved stored forwards information from the data storage 9 for detecting at which distance from the first vehicle 21 a rear-coming second vehicle 22 likely will detect stationary first vehicle 21.

Many different methods may be used for quickly determining said distance. For example, as illustrated in the sequences of figures 6B-6E, the electronic control system 8 may, based on the retrieved forwards visibility information, check the visibility of the parking position 24 at step-wise increasingly large distance from the parking position 24 until a position at which the parking position 24 is no longer visible or detectable by the image sensor, radar sensor, LIDAR sensor, or the like.

For example, the electronic control system 8 may, based on the retrieved forwards visibility information reflecting the visibility by the first vehicle when located at a first position Pos_1 that is located approximately a first distance 26 away from the parking position 24, as illustrated in figure 6B, determine that the parking position 24 is in sight and detectable by the image sensor, radar sensor, LIDAR sensor or the like.

The electronic control system 8 may then, using the same approach, repeat the evaluation for a second and third position Pos_2, Pos_3, as illustrated in figures 6C and 6D, respectively, determine that the parking position 24 is in sight and detectable by the image sensor, radar sensor, LIDAR sensor or the like, also at these positions.

However, when the electronic control system 8 evaluates the visibility of the parking position at the fourth position Pos_4, as illustrated in figure 6E, the electronic control system 8 determines that the parking position 24 is no longer in sight, i.e. no longer and detectable by the image sensor, radar sensor, LIDAR sensor or the like, because the parking position 24 is not in the visibility range 25 as experienced by the user, driver or driving system of the first vehicle 21 at the fourth position Pos_4. The electronic control system 8 may then conclude that a second rear-coming vehicle 22 likely will detect the first 21 first when arriving at the third position Pos_3 at approximately a third distance 27 away from the from parking position 24.

The electronic control system 8 may then, based on said third distance 27 and an estimated speed of the second rear-coming vehicle 22, calculate a reaction time that is available for a user, driver or driving system of the second rear-coming vehicle 22, for detecting the stationary first vehicle 21 for enabling a safe passing of the stationary first vehicle 21.

In other words, the risk parameter reflecting a risk for the parked first vehicle being hit by a rear-coming second vehicle 22, may for example be an estimated distance to the parking position of the first vehicle when coming into visual range of the parked first vehicle, as experienced by a second, rear-coming, vehicle, or driver thereof. Alternatively, the risk parameter reflecting a risk for the parked first vehicle being hit by a rear-coming second vehicle 22, may for example be an estimated time period from detecting the parked first vehicle until arriving at the parked first vehicle, as experienced by a second, rear-coming, vehicle, or driver thereof. This may for example be performed based by assuming that the second vehicle 22 is driving at constant speed at road speed limit.

Consequently, the second substep S221 of calculating a level of a risk parameter reflecting a risk for the parked first vehicle 21 being hit by a second, rear-coming, vehicle 22, based on the retrieved forwards visibility information, may involve calculating an estimated distance to the parking position 24 of the first vehicle 21 when the second vehicle 22 comes into visual range of the parked first vehicle 21, or a corresponding estimated time period.

Moreover, the third substep S231 of determining that the parking position 24 is a hazardous parking position 24 may then simply involve comparing said calculated level of the risk parameter with a predetermined threshold value, and concluding that the parking position 24 is indeed a hazardous parking position when said level of said risk parameter exceeds the threshold value.

The example embodiment of the method for operating a vehicle hazardous parking warning system for warning a user of a first vehicle 21 about hazardous parking of the first vehicle 21 may thus be deemed involving the followings steps, as described with reference to figure 4C: registering visibility information by means of at least one forwards directed sensor unit of the first vehicle while travelling of the first vehicle, for example be means of an image sensor unit, a radar sensor unit, a LIDAR sensor unit, or a combination thereof; detecting whether the first vehicle 21 enters a parking state at a parking position along the roadside. If yes, the method involves retrieving the stored sensor data, i.e. stored forwards visibility information that was registered by at least one forwards directed sensor unit of the first vehicle 21 while the road stretch leading up to the parking position 24 and before the first vehicle entered the parking state at the parking position 24; and based on the retrieved forwards visibility information calculating a level of a risk parameter reflecting a risk for the parked first vehicle being hit by a rear-coming second vehicle 22; and thereafter determining that the parking position is a hazardous parking position when said level of said risk parameter exceeds a threshold value. If yes, the method finally involves activating a warning feature for warning the user of the first vehicle about hazardous parking in response to determined hazardous parking position.

Furthermore, with reference to figure 4B, the vehicle hazardous parking warning system for warning a user of a first vehicle 21 about hazardous parking of the first vehicle 21 comprises: a first sensor 6 for detecting when the first vehicle 21 enters a parking state at a parking position 24 along the roadside; a warning output device 7, in particular a display, light signal device, vibration device, loudspeaker and/or smartphone associated with the user, for outputting a warning signal or warning message, and an electronic control system 8 configured for receiving input data from the first sensor 6 and for activating a warning feature by the warning output device 7 for warning the user of the first vehicle about hazardous parking in response to determined hazardous parking position. The warning system further comprises at least one forwards directed sensor unit 10 of the first vehicle 21, wherein the electronic control system 8 is further configured for determining whether the parking position of the first vehicle 21 is hazardous in terms of risk that the parked first vehicle being hit by a second, rear-coming, vehicle 22 by: retrieving stored forwards visibility information that was registered by the at least one forwards directed sensor unit 10 of the first vehicle 21 while travelling the road stretch leading up to the parking position 24 and before the first vehicle 21 entered the parking state at the parking position, wherein the retrieved forwards visibility information include information about visibility of the parking position of the first vehicle 21; calculating a level of a risk parameter reflecting a risk for the parked first vehicle 21 being hit by a second, rear-coming, vehicle 22, based on the retrieved forwards visibility information; and determining that the parking position is a hazardous parking position when said level of said risk parameter exceeds a threshold value.

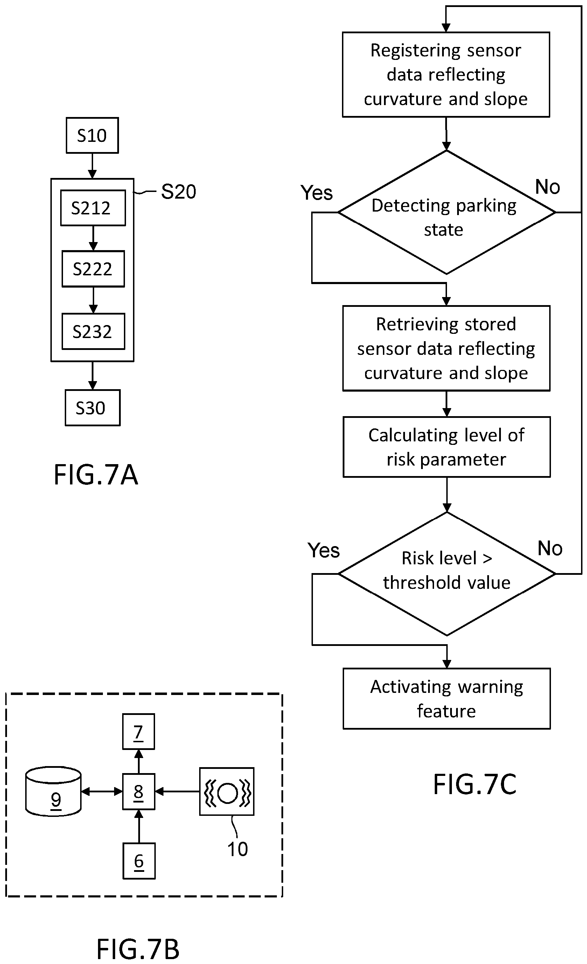

Still a further example embodiment of how to perform said second main step S20 is described below with reference to figure 7A, and the corresponding system is described with reference to figure 7B. Specifically, said second main step S20 may involve performing a first substep S212 of retrieving stored sensor data registered by a set of sensor units associated with the first vehicle while travelling the road stretch leading up to the parking position 24, wherein the retrieved sensor data corresponds to and/or reflects curvature and slope of said road stretch, i.e. the road stretch travelled by the first vehicle shortly before arriving at the parking position, The second main step S20 may additionally involve performing a second substep S222 of calculating a level of a risk parameter reflecting a risk for the parked first vehicle being hit by a second, rear-coming, vehicle based on the retrieved sensor data. Moreover, the second main step S20 may involve performing a third substep S232 of determining that the parking position is a hazardous parking position when said level of said risk parameter exceeds a threshold value.

Similar to the example embodiment described above with reference to figures 4A-4C, the underlying idea of the example embodiment of the disclosure is also to evaluate the forwards visibility as experienced and detected by the first vehicle 21 when driving along the road, and assuming that a rear-coming second vehicle 22 experiences approximately the same condition as the first vehicle 21 experienced shortly before, and thereby being able to make a qualified estimation of at which distance from the first vehicle 21 the user, driver or driving system of the rear-coming second vehicle 22 will detect the first vehicle 21 when parking at the parking position. However, in the example embodiment described with reference to figures 7A-7C, the forwards visibility is not determined based on an image sensor, radar sensor, or LIDAR sensor, or the like, but instead based on sensor data reflecting curvature and slope of a road stretch travelled by the first vehicle 21 shortly before arriving at the parking position 24, and preferably also vehicle speed.

For example, the retrieved sensor data include: sensor data indicating road curvature, in particular steering wheel angular position data, vehicle lateral acceleration data, steering rack position data of a power steering system, wheel suspension data, and/or gyro data; sensor data indicating road slope, in particular vehicle pitch angle data, propulsion motor torque output data, or vertical acceleration data; and/or sensor data indicating vehicle speed or position, in particular wheel rotational speed data, propulsion motor rotational speed data, or GPS data.

The sensors of the set of sensor units described above are for example installed within the first vehicle 21 or within a smartphone 15 located within the first vehicle 21.

Steering wheel angular position data may be detected by means of a steering wheel angular sensor, and corresponding vehicle turning radius may be calculated based on vehicle wheel base. Moreover, vehicle lateral acceleration data may be detected by acceleration sensors arranged for detecting vehicle lateral and/or longitudinal acceleration. Road curvature may also be calculated by registering steering rack position data of a power steering system by means of a suitable linear displacement sensor. Furthermore, wheel suspension data, measured using for example a suitable linear displacement sensor at each wheel, may be used for estimating road curvature and slope via the registered compression. Finally, road curvature and/or slope may also be detected using a gyro sensor.

The acceleration and/or gyro sensors may for example be integrated in a smartphone in combination with vehicle speed derivable by means of a GPS-receiver within the smartphone.

Based on sensor data reflecting curvature and slope of a road stretch travelled by the first vehicle 21 shortly before arriving at the parking position 24, and preferably also vehicle speed, an estimate of the visibility of the parking position 24 by a second rear-coming vehicle 22 may be performed. For example, the road crest 19 of figure 6A may likely be detectable with relatively good accuracy based in vertical acceleration data and associated vehicle speed. Similarly, sharp road bends detectable by lateral acceleration sensors, gyro, steering wheel angular position data, steering rack position data, wheel suspension data, or the like, may be deemed with a certain likelihood indicating the presence of visual obstacles between the rear-coming second vehicle 22 and the parking position 24 of the first vehicle 21.

The method may alternative involve determining a 3D path of said road stretch based on said sensor data reflecting curvature and slope of a road stretch travelled by the first vehicle 21 shortly before arriving at the parking position 24, wherein the second substep S222 of calculating a level of a risk parameter reflecting a risk for the parked first vehicle being hit by a second, rear-coming, vehicle based on the retrieved sensor data is performed using said 3D path.

The retrieved sensor data may for example correspond to forwards visibility information or sensor data that was registered and stored not more than five minutes, specifically within a range of 3 - 60 seconds, prior to detecting that the first vehicle 21 having entered the parking state at a parking position along the roadside. Alternatively, the retrieved sensor data may for example correspond to information or data that was registered and stored not more than 2000 metres, specifically not more than 1000 metres, prior to the parking position 24 along the roadside.

This example embodiment of the method for operating a vehicle hazardous parking warning system for warning a user of a first vehicle 21 about hazardous parking of the first vehicle 21 may thus be deemed involving the followings steps, as described with reference to figure 7C: registering sensor data by a set of sensor units associated and travelling with the first vehicle 21 while travelling the road stretch leading up to the parking position 24 and before the first vehicle 21 entered the parking state at the parking position 24, wherein the retrieved sensor data reflects curvature and slope of said road stretch 20; detecting whether the first vehicle 21 enters a parking state at a parking position 24 along the roadside. If yes, the method involves retrieving the stored sensor data registered by a set of sensor units while travelling with the first vehicle 21, wherein the retrieved sensor data reflects curvature and slope of a road stretch travelled by the first vehicle 21 shortly before arriving at the parking position 24; and based on the retrieved sensor data calculating a level of a risk parameter reflecting a risk for the parked first vehicle 21 being hit by a rear-coming second vehicle 22; and thereafter determining that the parking position 24 is a hazardous parking position when said level of said risk parameter exceeds a threshold value. If yes, the method finally involves activating a warning feature for warning the user of the first vehicle 21 about hazardous parking in response to determined hazardous parking position.

Furthermore, with reference to figure 7B, this example embodiment of the vehicle hazardous parking warning system for warning a user of a first vehicle 21 about hazardous parking of the first vehicle 21 comprises: a first sensor 6 for detecting when the first vehicle 21 enters a parking state at a parking position along the roadside; a warning output device 7, in particular a display, light signal device, vibration device, loudspeaker and/or smartphone associated with the user, for outputting a warning signal or warning message; and an electronic control system 8 configured for receiving input data from the first sensor 6 and for activating a warning feature by the warning output device 7 for warning the user of the first vehicle about hazardous parking in response to determined hazardous parking position. The warning system further comprises a set of sensor units 10 configured for detecting road curvature and road slope, wherein the electronic control system 8 is configured for determining whether the parking position of the first vehicle 21 is hazardous in terms of risk that the parked first vehicle 21 being hit by a second, rear-coming, vehicle by: retrieving stored sensor data registered by the set of sensor units 10 associated with the first vehicle 21 while travelling the road stretch leading up to the parking position 24 and before the first vehicle 21 entered the parking state at the parking position 24, wherein the retrieved sensor data reflects curvature and slope of a road stretch travelled by the first vehicle 21 shortly before arriving at the parking position; calculating a level of a risk parameter reflecting a risk for the parked first vehicle 21 being hit by a second, rear-coming, vehicle 22 based on the retrieved sensor data, and determining that the parking position is a hazardous parking position when said level of said risk parameter exceeds a threshold value.

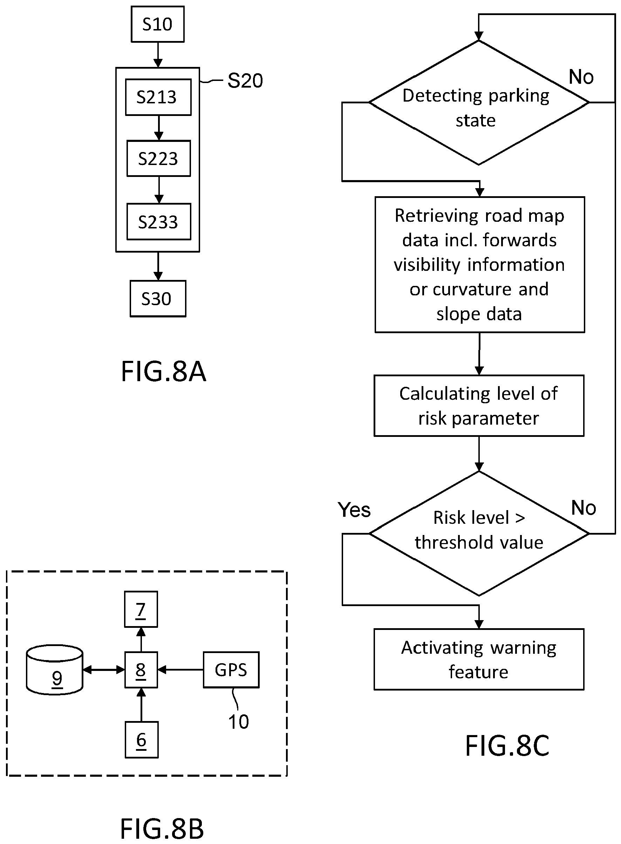

Still a further example embodiment of how to perform said second main step S20 is described below with reference to figure 8A, and the corresponding system is described with reference to figure 8B. Specifically, said second main step S20 may involve performing a first substep S213 of retrieving stored sensor data was registered by at least one sensor unit associated with a third vehicle while travelling the road stretch leading up to the parking position 24, wherein the retrieved sensor data corresponds to forwards visibility information reflecting visibility of the parking position 24 of the first vehicle 21 or curvature and/or slope data of said road stretch. In addition, said second main step S20 may involve a second substep S223 of calculating a level of a risk parameter reflecting a risk for the parked first vehicle being hit by a second, rear-coming, vehicle based on the retrieved forwards visibility information or road curvature data and road slope data. Finally, said second main step S20 may involve performing a third substep S233 of determining that the parking position is a hazardous parking position when said level of said risk parameter exceeds a threshold value.

The underlying idea of this example embodiment of the disclosure is thus to use already available sensor data having either forwards visibility information or curvature and slope data, or all of it, included therein, thereby effectively eliminating the need for the first vehicle 21 to itself register said forwards visibility information or curvature and slope data. The forwards visibility information or curvature and slope data may instead be registered by a third vehicle and thereafter be stored at a location accessible for electronic control system 8 of the first vehicle 21 when needed.

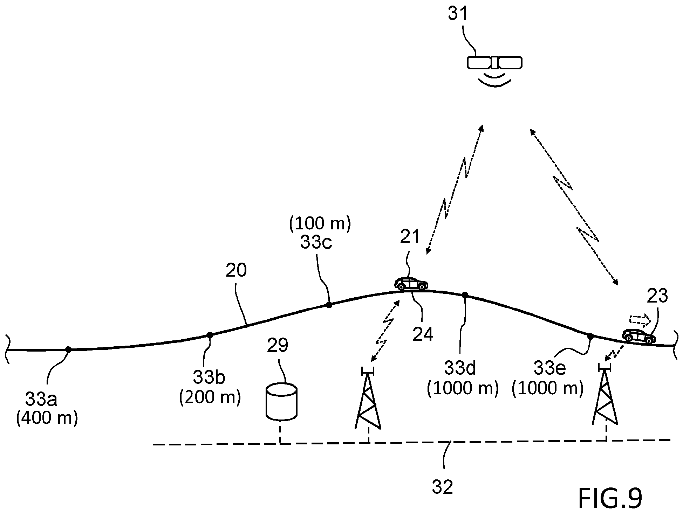

For example, with reference to figure 9, forwards visibility information and/or curvature and slope data may be registered by a third vehicle 23 while the third vehicle 23 is travelling along the road 20, i.e. while travelling the road stretch leading up to the parking position 24. The forwards visibility information or curvature and slope data may thereafter be stored at a location accessible for the electronic control system 8 of the first vehicle 21, such as for example locally on a data storage 9 of the first vehicle 21, or remotely on a server 29 or via a cloud computing service. Hence, there may be a significant difference in time between time of data registration by the third vehicle 23 and time of data retrieval by first vehicle 21, such as hours, days or even years.

In particular, forwards visibility information or curvature and slope data is first registered by the third vehicle 23 and stored together with geographical location data as received from a GPS satellite system 31 on for example a remote stationary server 29 via a wireless communication system 32. The stored forwards visibility information or curvature and slope data may for example correspond to a set of geographical positions 33a, 33b, 33c, 33d, 33e, each associated with a certain visibility range, e.g. 400m, 200m, 100m, 1000m, 1000m, respectively.

The step of evaluating the stored forwards visibility information or curvature and slope data for each geographical position 33a, 33b, 33c, 33d, 33e and deriving a certain unique visibility range may be performed by the server or other cloud computing resource, thereby significantly reducing the computing load of the electronic control system of the first vehicle 21.

In case of a subsequent emergency breakdown or the like of the first vehicle 21 at a parking position 24, the stationary first vehicle 21 may simply retrieve sensor data for the relevant parking location 24, for example by downloading from the remote server 29 or having the sensor data stored in the data storage 9 in the vehicle. The sensor data includes forwards visibility information and/or road curvature data and road slope data of the road stretch leading up to the parking position 24, i.e. the road stretch travelled by the first vehicle 21 shortly before arriving at the parking position 24. As mentioned above, the sensor data may include visibility range for a set of geographical locations. Based on the sensor data the electronic control system 8 may calculate a level of a risk parameter reflecting a risk for the parked first vehicle 21 being hit by a second, rear-coming, vehicle 22, and concluding hazardous parking position when said level of said risk parameter exceeds a threshold value.

Alternatively, the stationary first vehicle 21 may simply upload its geographical position to for example the remote server 29, which thereafter may be configured to calculate said level of a risk parameter reflecting a risk for the parked first vehicle 21 being hit by a second, rear-coming, vehicle 22, and concluding hazardous parking position when said level of said risk parameter exceeds a threshold value, thereby enabling even less computational effort by the electronic control system 8 of the first vehicle 21.

This example embodiment of the method for operating a vehicle hazardous parking warning system for warning a user of a first vehicle 21 about hazardous parking of the first vehicle 21 may thus be deemed involving the followings steps, as described with reference to figure 8C: detecting whether the first vehicle 21 enters a parking state at a parking position 24 along the roadside. If yes, the method involves retrieving stored forwards visibility information or curvature and slope data of a road stretch travelled by the first vehicle 21 shortly before arriving at the parking position 24, and based on the retrieved information or data calculating a level of a risk parameter reflecting a risk for the parked first vehicle 21 being hit by a rear-coming second vehicle 22. Alternatively, the method involves uploading geographical position data about the parking position 24 of the first vehicle 21 to a remote server or cloud computing service, which subsequently based on stored forwards visibility information or curvature and slope data within the server or cloud calculates a level of a risk parameter reflecting a risk for the parked first vehicle 21 being hit by a rear-coming second vehicle 22, and determines that the parking position 24 is a hazardous parking position when said level of said risk parameter exceeds a threshold value. In response to a determined hazardous parking position, the method involves informing the first vehicle 21 about the hazardous parking and activating a warning feature for warning the user of the first vehicle 21 about hazardous parking.

Furthermore, with reference to figure 8B, according to this example embodiment of the vehicle hazardous parking warning system for warning a user of a first vehicle 21 about hazardous parking of the first vehicle 21, the system comprises a first sensor 6 for detecting when the first vehicle 21 enters a parking state at a parking position along the roadside, a warning output device 7, in particular a display, light signal device, vibration device, loudspeaker and/or smartphone associated with the user, for outputting a warning signal or warning message, and an electronic control system 8 configured for receiving input data from the first sensor and for activating a warning feature by the warning output device for warning the user of the first vehicle 21 about hazardous parking in response to determined hazardous parking position. The electronic control system 8 is configured for determining whether the parking position 24 of the first vehicle 12 is hazardous in terms of risk that the parked first vehicle being hit by a second, rear-coming, vehicle by: retrieving stored sensor data that was registered by at least one sensor unit associated with another vehicle while travelling the road stretch leading up to the parking position 24, wherein the retrieved sensor data corresponds to forwards visibility information reflecting visibility of the parking position 24 of the first vehicle 21 or curvature and/or slope data of said road stretch; calculating a level of a risk parameter reflecting a risk for the parked first vehicle 21 being hit by a second, rear-coming, vehicle 22 based on the retrieved forwards visibility information or road curvature data and road slope data; and determining that the parking position 24 is a hazardous parking position when said level of said risk parameter exceeds a threshold value.

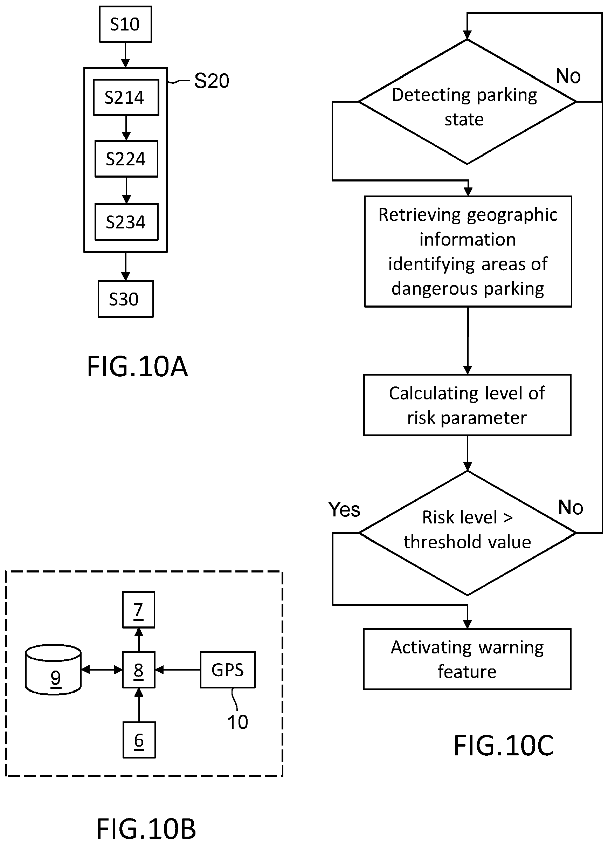

Furthermore, still a further example embodiment of how to perform said second main step S20 is described below with reference to figure 10A, and the corresponding system is described with reference to figure 10B. Specifically, said second main step S20 may involve performing a first substep S214 of retrieving geographic information identifying areas of dangerous parking. Moreover, said second main step S20 may involve a second substep S224 of calculating a level of a risk parameter reflecting a risk for the parked first vehicle being hit by a second, rear-coming, vehicle based on the retrieved geographic information and the parking position of the first vehicle. Finally, said second main step S20 may involve performing a third substep S234 of determining that the parking position is a hazardous parking position when said level of said risk parameter exceeds a threshold value.

The underlying idea of this example embodiment of the disclosure is thus to use already produced geographic information identifying areas of dangerous parking along the road 20, thereby effectively eliminating the need for the first vehicle 21 to for example register forwards visibility information or curvature and slope data and also to transform said information or data to useful conclusions about dangerous parking. The evaluation of the level of risk for being hit be a rear-coming second vehicle, at each location along the road 20, is instead performed long before based on for example map data, forwards visibility information, road curvature and slope data, generally hazardous road positions such as for example railroad crossing, road crossings, etc. Said pre-evaluation of the level of risk for being hit be a rear-coming second vehicle at each location along the road 20 may for example be performed by a remote server or cloud computing resources, and then made available for downloading to various users or vehicles, such as the first vehicle 21, when needed, thereby significantly reducing the computing load of the electronic control system 8 of the first vehicle 21.

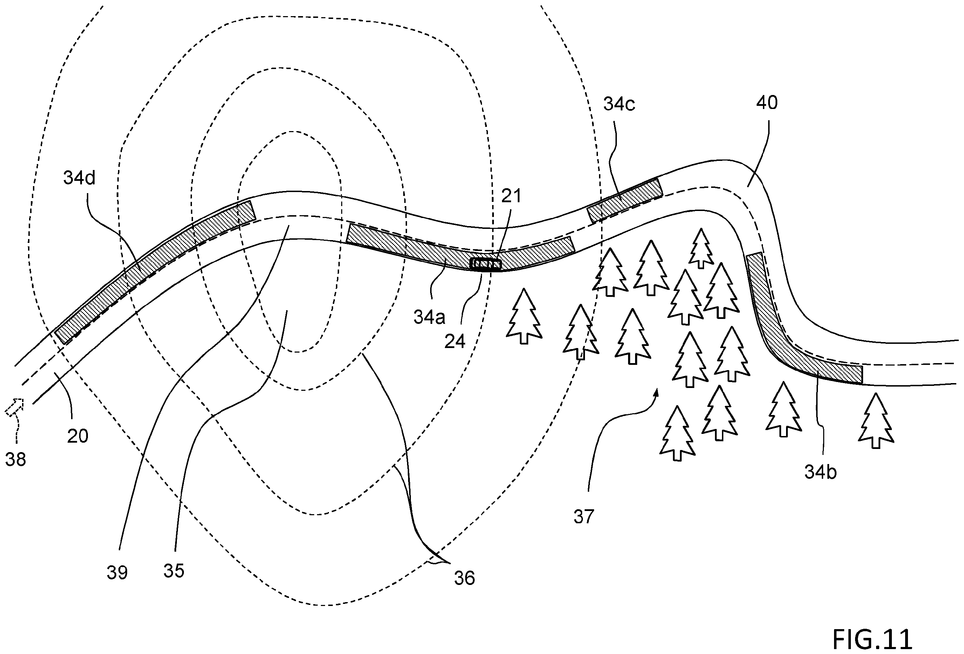

For example, with reference to figure 11, which schematically shows a road map with individual dangerous parking areas 34a-34d mapped on various sections of the road 20. For illustration of the underlying concept of a map including dangerous parking areas 34a-34d, this example map also includes a hill 25 defined by contour lines 36, as well as an area of trees 37.

When driving on the right side of the road 20 along the direction indicated by arrow 38, a first dangerous parking area 34a is caused by the hill 35, because the crest 39 of the hill 35 will effectively block the view of a stationary vehicle parked in the first dangerous parking area 34a, for example due to emergency breakdown or the like. In other words, a second rear-coming vehicle 22 will detect a stationary first vehicle 21 in parked state in the first dangerous parking area 34a first when arriving at the crest 39 of the hill 25, thereby giving the second rear-coming vehicle 22 relatively short reaction time for detecting and passing the first vehicle 21 in a safe manner.

Similarly, when driving on the right side of the road 20 along the direction indicated by arrow 38, a second dangerous parking area 34b is caused by the area of trees 37, because the trees 37 in combination with the road bend 40 will effectively block the view of a stationary vehicle parked in the second dangerous parking area 34b, for example due to emergency breakdown or the like. In other words, a second rear-coming vehicle 22 will detect a stationary first vehicle 21 in the second dangerous parking area 34b first when arriving at the bend 40, thereby giving the second rear-coming vehicle 22 relatively short reaction time for detecting and passing the first vehicle 21 in a safe manner.

When driving on the right side of the road 20 in the opposite direction to the direction indicated by arrow 38, a third dangerous parking area 34c is caused by the area of trees 37, because the trees 37 in combination with the road bend 40 will effectively block the view of a stationary vehicle parked in the third dangerous parking area 34c, for example due to emergency breakdown or the like. In other words, a second rear-coming vehicle 22 will detect a stationary first vehicle 21 in the third dangerous parking area 34c first when arriving at the bend 40, thereby giving the second rear-coming vehicle 22 relatively short reaction time for detecting and passing the first vehicle 21 in a safe manner.

Similar to the first example, when driving on the right side of the road 20 in the opposite direction to the direction indicated by arrow 38, a fourth dangerous parking area 34d is caused by the hill 35, because the crest 39 of the hill 35 will effectively block the view of a stationary vehicle parked in the fourth dangerous parking area 34d, for example due to emergency breakdown or the like. In other words, a second rear-coming vehicle 22 will detect a stationary first vehicle 21 in the fourth dangerous parking area 34d first when arriving at the crest 39 of the hill 25, thereby giving the second rear-coming vehicle 22 relatively short reaction time for detecting and passing the first vehicle 21 in a safe manner.

Consequently, in case of an emergency breakdown or the like of the first vehicle 21 at a parking position 24, as illustrated in figure 11, the stationary first vehicle 21 may simply check the geographic position of the first vehicle 21, for example be means of a GSP system, and subsequently retrieve geographic information identifying areas of dangerous parking relevant for the geographic position of the first vehicle 21 from the data storage 9 of the first vehicle 21 or from a remote server. The first vehicle 21 may then for example check whether the parking position 24 is located on a dangerous parking area, for example by comparing geographical positions, e.g. checking whether the parking position overlaps with a road stretch associated with dangerous parking position.

The calculation of a level of a risk level may Boolean, i.e. either yes or no. Alternatively, parking on an area associated with dangerous parking may result in a certain risk value that is higher than the threshold value. Still more alternatively, the geographic information identifying areas of dangerous parking may include different levels of dangerousness with each area, and calculation of the level of risk may simply involve identifying the level of risk associated with the parking position 24. Finally, the method involves determining that the parking position is a hazardous parking position when said level of said risk parameter exceeds a threshold value.

Alternatively, the stationary first vehicle 21 may simply upload its geographical position to for example a remote server, which thereafter may be configured to calculate said level of a risk parameter reflecting a risk for the parked first vehicle 21 being hit by a second, rear-coming, vehicle 22, based on retrieved geographic information identifying areas of dangerous parking, and concluding hazardous parking position when said level of said risk parameter exceeds a threshold value, thereby enabling even less computational effort by the electronic control system 8 of the first vehicle 21.

This example embodiment of the method for operating a vehicle hazardous parking warning system for warning a user of a first vehicle 21 about hazardous parking of the first vehicle 21 may thus be deemed involving the followings steps, as described with reference to figure 10C: detecting whether the first vehicle 21 enters a parking state at a parking position 24 along the roadside. If yes, the method involves retrieving geographic information identifying areas of dangerous parking and based on the retrieved geographic information calculating a level of a risk parameter reflecting a risk for the parked first vehicle 21 being hit by a rear-coming second vehicle 22. Alternatively, the may method involves uploading geographical position data about the parking position 24 of the first vehicle 21 to a remote server or cloud computing service, which subsequently based on stored geographic information identifying areas of dangerous parking within the server or cloud calculates a level of a risk parameter reflecting a risk for the parked first vehicle 21 being hit by a rear-coming second vehicle 22. Thereafter, the method involves determining that the parking position 24 is a hazardous parking position when said level of said risk parameter exceeds a threshold value. In response to a determined hazardous parking position, the method involves informing the first vehicle 21 about the hazardous parking and activating a warning feature for warning the user of the first vehicle 21 about hazardous parking.

Furthermore, with reference to figure 10B, according to this example embodiment of the vehicle hazardous parking warning system for warning a user of a first vehicle 21 about hazardous parking of the first vehicle 21, the system comprises a first sensor 6 for detecting when the first vehicle 21 enters a parking state at a parking position along the roadside, a warning output device 7, in particular a display, light signal device, vibration device, loudspeaker and/or smartphone associated with the user, for outputting a warning signal or warning message, and an electronic control system 8 configured for receiving input data from the first sensor and for activating a warning feature by the warning output device for warning the user of the first vehicle 21 about hazardous parking in response to determined hazardous parking position. The electronic control system 8 is configured for determining whether the parking position of the first vehicle is hazardous in terms of risk that the parked first vehicle being hit by a second, rear-coming, vehicle by: retrieving geographic information identifying areas of dangerous parking, calculating a level of a risk parameter reflecting a risk for the parked first vehicle being hit by a second, rear-coming, vehicle based on the retrieved geographic information and the parking position of the first vehicle, and determining that the parking position is a hazardous parking position when said level of said risk parameter exceeds a threshold value.

The various different methods and systems for performing of the second main step S20 described above, i.e. the various different methods and systems for determining whether the parking position of the first vehicle 21 is hazardous in terms of risk that the parked first vehicle 21 being hit by a rear-coming second vehicle 22, may of course be implemented in various combinations for further increasing the reliability and accuracy of the level of hazard for rear collision while parking. For example, the use of forwards visibility information provided by a forwards directed sensor unit 10 of the first vehicle 21, as described with reference to figures 4A-4C may be combined with the use of curvature and/or slope data provided by a set of sensors of the first vehicle 21, as described with reference to figures 7A-7C, for further improved reliability and accuracy of the estimate of level of hazard for rear collision while parking. Similarly, the use of forwards visibility information provided by a forwards directed sensor unit 10 of the first vehicle 21, as described with reference to figures 4A-4C may be combined with the use of forwards visibility information provided by a forwards directed sensor unit 10 of the third vehicle 23 and/or curvature and/or slope data provided by a set of sensors of the third vehicle 23, as described with reference to figures 8A-8C, for further improved reliability and accuracy of the estimate of level of hazard for rear collision while parking. In fact, all the various different methods and systems for performing of the second main step S20 described above may be combined with each other in all possible combinations, even if not all possible combinations are explicitly listed herein for sake of conciseness.

The above-mentioned road stretch travelled by the first vehicle 21 shortly before arriving at the parking position 24 may for example correspond to a road stretch extending not more than 2000 metres, specifically not more than 1000 metres, prior to the parking position 24 of the first vehicle 21. In other words, it is generally only relevant to the check the road stretch immediately before arriving at the parking position 24 from a rear side, because only this area has an effect on the risk for rear collision with the stationary first vehicle 21.

Moreover, the above-mentioned risk parameter reflecting a risk for the parked first vehicle 21 being hit by a second, rear-coming, vehicle 22, may be any of, or a combination of: risk assessment score value; an estimated distance to the parking position of the first vehicle when coming into visual range of the parked first vehicle, as experienced by a second, rear-coming, vehicle, or driver thereof; or an estimated time period from detecting the parked first vehicle until arriving at the parked first vehicle, as experienced by a second, rear-coming, vehicle, or driver thereof. The estimated time period may for example be calculated based on assumed constant driving speed, for example at the road speed limit.

The step of calculating the level of the risk parameter may additionally take road or road lane width at the parking position into account. A relatively narrow road contributes to increased risk for the parked first vehicle being hit by a second, rear-coming, vehicle 22 due to the decreased possibility to safely pass the first vehicle 21. Road width 41 and lane width 42 are defined in figure 12, which schematically illustrates a first vehicle 21 having entered the parking state at a parking position 24 along a roadside of road 20, for example due to breakdown

Moreover, a further aspect that may be relevant and taken into account, alone or in combination with the road width 41 or road lane width 42 when calculating the level of the risk parameter, is the size or portion of the road or road lane width that is blocked by the first vehicle 21 at the parking position 24. The blocked portion of the road 20 may for example be defined in percentage or in metres of the road or road lane width. With reference again to figure 12, the blocked portion 43 is here about 50% of the road lane width 42. However, as schematically illustrated in figure 13, if the first vehicle 21 stops at a dedicated parking bay 44 or the like, the first vehicle 21 completely leaves the dedicated driving area associated with the road width 41 or road lane with 42, thereby making the size or portion of the road or road lane width that is blocked by the first vehicle 21 at the parking position 24 zero and nil.

A further example is schematically illustrated in figure 14, wherein the road has a small breakdown lane 45. Thereby, the blocked portion 43 of the road lane width 42 or road width 41 may be significantly reduced.

Still a further example is schematically illustrated in figure 15, wherein the road 20 has no road centre markings, but relatively small road shoulders 46. Thereby, the blocked portion 43 of the road width 41 may be slightly reduced.

Moreover, a further aspect that may be relevant and taken into account, alone or in combination with the features described above, when calculating the level of the risk parameter, is road speed limit at the parking position 24 and/or on the road stretch leading up to the parking position. A relatively high road speed limit may be deemed contributing to increased risk for the parked first vehicle being hit by a second, rear-coming, vehicle due to reduced reaction time.

Moreover, a further aspect that may be relevant and taken into account, alone or in combination with the features described above, when calculating the level of the risk parameter, is foggy weather condition at the parking position and/or on the road stretch leading up to the parking position. A foggy weather condition contributes to increased risk for the parked first vehicle being hit by a second, rear-coming, vehicle, because the visibility is reduced.

Moreover, a further aspect that may be relevant and taken into account, alone or in combination with the features described above, when calculating the level of the risk parameter, is precipitation condition (rain, snow) at the parking position. Similar to above, precipitation condition contributes to increased risk for the parked first vehicle being hit by a second, rear-coming, vehicle, because the visibility is reduced.

Moreover, a further aspect that may be relevant and taken into account, alone or in combination with the features described above, when calculating the level of the risk parameter, is sunlight, in particular incident angle of sunlight relative to the orientation of the road stretch leading up to parking position 24, i.e. road stretch travelled by the first vehicle shortly, e.g. about for example within 5 - 300 m, before arriving at the parking position. Sun glare on the driver or driving system of the second, rear-coming, vehicle 22 typically contributes to increased risk for the parked first vehicle being hit by the second, rear-coming, vehicle 22 due to decreased visibility.

Moreover, a further aspect that may be relevant and taken into account, alone or in combination with the features described above, when calculating the level of the risk parameter, is outdoor light condition at the parking position. Low outdoor light condition, i.e. darkness, contributes to increased risk for the parked first vehicle being hit by the second, rear-coming, vehicle, due to reduced visibility.

Moreover, a further aspect that may be relevant and taken into account, alone or in combination with the features described above, when calculating the level of the risk parameter, is road grip at the parking position. Poor road grip, for example die snow, ice, or the like, typically contributes to increased risk for the parked first vehicle being hit by the second, rear-coming, vehicle, because stop distance in increased and less prompt evasive driving manoeuvre may be performed.

Moreover, a further aspect that may be relevant and taken into account, alone or in combination with the features described above, when calculating the level of the risk parameter, is traffic intensity at the parking position. High traffic intensity contributes to increased risk for the parked first vehicle being hit by the second, rear-coming, vehicle, because the driver or driving system of second vehicle 22 is more distracted, and there may be less room or possibility to avoid collision by evasive manoeuvre. In addition, oncoming traffic causes more glare during dark ambient conditions.

Moreover, a further aspect that may be relevant and taken into account, alone or in combination with the features described above, when calculating the level of the risk parameter, is first vehicle detectability by a driver or driving system of the second, rear-coming, vehicle. A poor first vehicle detectability contributes to increased risk for the parked first vehicle being hit by the second, rear-coming, vehicle. A large and brightly coloured first vehicle 21 is generally more easily detectable at a distance from the behind compared with a small and non-brightly coloured vehicle.

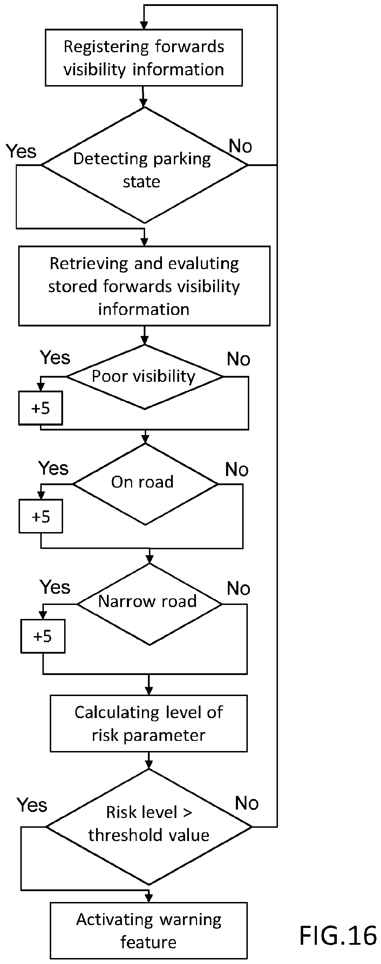

The various factors described above may be taken into account by designating each of a selected set of them with a certain value or points, and subsequently calculating a risk assessment score value, i.e. a total score, by totalling the value or points of each relevant risk factor. For example, with reference to figure 16, which shows the method steps of a modified version of the embodiment described above with reference to figure 4C, but here complemented with assessment points for each of the factors: visibility; location of first vehicle on road; and road width.

Specifically, with reference to figure 16, after having assessed the forwards visibility of the parking position 24, as registered shortly there before by a forwards directed sensor unit 10 of the first vehicle 21 while driving towards the parking position 24, determined poor forwards visibility of the parking position 24, results in five risk assessment points. Then the lateral position of the first vehicle 21 on the road 20 may be assessed, for example by means of image sensors detecting road markings and road edges, thereby enabling calculation of a blocking portion caused by the first vehicle 21. Parking on the road, which corresponds to for example parking with a significant blocking portion of the road width 41 or road lane width 42, such as for example at least 20% of the road width 41 or at least 40% of road lane width 42, results in five risk assessment points. Finally, the absolute value of the road width 41 or road lane width 42 is evaluated, and a road width 41 of for example less than 6 metres or a road lane width of less than 3 metres results in five risk assessment points.

It should be noted that the sequence for evaluating the selected factors may be performed in any order and do not necessarily imply an order as provided. Rather, the methods discussed are merely one embodiment of the present disclosure as contemplated.

In this example embodiment, calculation of a level of a risk parameter involves determining a risk assessment score value by calculating the sum of the attributed risk assessments points resulting from the evaluation, and thereafter comparing the risk assessment score value with a predetermined value.

Additional factors may of course be taken into account. Furthermore, one or more or all of the factors taken into account may also be associated with more refined and gradual risk assessment points, such that each factor is attributed a more correct risk assessment point value. For example, with reference to example method of figure 16, the forwards visibility assessment may include for example four visibility levels, e.g. poor, medium, good and excellent visibility, which results in for example 10 points, 6 points, 2 points and zero points, respectively. Also the factors On road and Narrow road may be implemented with corresponding more refined and gradual risk assessment points.

The disclosure also relates to a computer program comprising instructions, which, when the program is executed by a computer, cause the computer to carry out the steps of the method described above.

The disclosure also relates to a computer-readable storage medium comprising instructions which, when executed by a computer, cause the computer to carry out the steps of the method described above.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of the vehicle hazardous parking warning system, the one or more programs comprising instructions for performing the method according to any one of the above-discussed embodiments. Alternatively, according to another exemplary embodiment a cloud computing system can be configured to perform any of the method aspects presented herein. The cloud computing system may comprise distributed cloud computing resources that jointly perform the method aspects presented herein under control of one or more computer program products. Moreover, the processor may be connected to one or more communication interfaces and/or sensor interfaces for receiving and/transmitting data with external entities such as e.g. sensors arranged on the vehicle surface, an off-site server, or a cloud-based server.

The processor(s) associated with the electronic control system 8 of the vehicle hazardous parking warning system may be or include any number of hardware components for conducting data or signal processing or for executing computer code stored in memory. The system may have an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof.

Furthermore, each of the claims 4-8 included below define lists of various features that may be implemented alone or various alternative combinations with each other, and even if not each and every single alternative combination of features is explicitly disclosed herein for sake of clarity and conciseness of the description, all said various combinations of features stemming from the listed options of claims 4-8 may in fact be selected and implemented and should thus be deemed disclosed herein.

Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

## Claims

1. Method for operating a vehicle hazardous parking warning system for warning a user of a first vehicle (21) about hazardous parking of the first vehicle (21), the method comprising:

   detecting that the first vehicle (21) enters a parking state at a parking position (24) along the roadside,
   determining whether the parking position (24) of the first vehicle (21) is hazardous in terms of risk that the parked first vehicle (21) being hit by a second, rear-coming, vehicle (22) by:

      - retrieving stored sensor data that was registered by at least one sensor unit (10) associated with the first vehicle (21) or a third vehicle (23) while travelling a road stretch leading up to the parking position (24), wherein the retrieved sensor data reflects visibility of the parking position (24) of the first vehicle (21); calculating a level of a risk parameter reflecting a risk for the parked first vehicle (21) being hit by a second, rear-coming, vehicle (22) based on the retrieved sensor data; and determining that the parking position (24) is a hazardous parking position when said level of said risk parameter exceeds a threshold value, and/or
- retrieving geographic information identifying areas of dangerous parking (34a-d); calculating a level of a risk parameter reflecting a risk for the parked first vehicle (21) being hit by a second, rear-coming, vehicle (22) based on the retrieved geographic information and the parking position (24) of the first vehicle (21); and determining that the parking position (24) is a hazardous parking position when said level of said risk parameter exceeds a threshold value, and

activating a warning feature for warning the user of the first vehicle (21) about hazardous parking in response to determined hazardous parking position.

2. The method according to claim 1, wherein the stored sensor data was registered by at least one forwards directed sensor unit (10) of the first vehicle (21) while travelling the road stretch leading up to the parking position (24) and before the first vehicle (21) entered the parking state at the parking position (24), wherein the retrieved sensor data corresponds to forwards visibility information reflecting visibility of the parking position (24) of the first vehicle (21).

3. The method according to any of the preceding claims, wherein the stored sensor data was registered by a set of sensor units associated with the first vehicle (21) while travelling the road stretch leading up to the parking position (24) and before the first vehicle (21) entered the parking state at the parking position (24), wherein the retrieved sensor data corresponds to curvature and/or slope data of said road stretch.

4. The method according to any of the preceding claims, wherein the stored sensor data was registered by at least one sensor unit associated with the third vehicle while travelling the road stretch leading up to the parking position (24), wherein the retrieved sensor data corresponds to forwards visibility information reflecting visibility of the parking position (24) of the first vehicle (21) or curvature and/or slope data of said road stretch.

5. The method according to any of the preceding claims 2 - 4, wherein the retrieved forwards visibility information or retrieved sensor data corresponds to:

- forwards visibility information or sensor data that was registered and stored not more than five minutes, specifically within a range of 3 - 60 seconds, prior to detecting that the first vehicle (21) entered the parking state at the parking position (24) along the roadside; or
- forwards visibility information or sensor data that was registered and stored not more than 2000 metres, specifically not more than 1000 metres, prior to the parking position (24) along the roadside.

6. The method according to any of the preceding claims, wherein the risk parameter reflecting a risk for the parked first vehicle (21) being hit by a second, rear-coming, vehicle (22), is any of, or a combination of:

risk assessment score value;
estimated distance to the parking position (24) of the first vehicle (21) when coming into visual range of the parked first vehicle (21), as experienced by a second, rear-coming, vehicle (22), or driver thereof;
estimated time period from detecting the parked first vehicle (21) until arriving at the parked first vehicle (21), as experienced by a second, rear-coming, vehicle (22), or driver thereof.

7. The method according to any of the preceding claims 3 - 6, wherein the sensors of the set of sensor units are installed within the first vehicle (21) or the third vehicle (23), or within a mobile electronic device (15) located within the first vehicle (21) or the third vehicle (23), and wherein the retrieved sensor data corresponding to curvature and/or slope data of said road stretch include:

- sensor data indicating road curvature, in particular steering wheel angular position data, vehicle lateral acceleration data, steering rack position data of a power steering system, wheel suspension data, and/or gyro data;
- sensor data indicating road slope, in particular vehicle pitch angle data, propulsion motor torque output data, and/or vertical acceleration data;
- sensor data indicating vehicle speed or position, in particular wheel rotational speed data, propulsion motor rotational speed data, or GPS data.

8. The method according to any of the preceding claims, wherein the step of activating a warning feature for warning the user of the first vehicle (21) about hazardous parking involves any of, or a combination of:

  - activating a visual and/or audio warning signal; or
  - transmitting a voice warning message via a display and/or a loudspeaker;
  wherein said warning signal or warning message is outputted via a warning output device (7), in particular a display, light signal device, vibration device and/or loudspeaker, located within the first vehicle (21) or via a mobile electronic device (15) associated with a user of the first vehicle (21).

9. The method according to any of the preceding claims, wherein the step of activating a warning feature for warning the user of the first vehicle (21) about hazardous parking additionally involves providing a recommended action to the user of the first vehicle (21), wherein the recommended action relates to any of, or a combination of:

  - moving the first vehicle (21) away from the current parking position (24);
  - evacuating the first vehicle (21);
  - setting out warning device for warning a driver or driving system of the second, rear-coming, vehicle (22) about the parked first vehicle (21), wherein said recommended action is outputted via a display and/or loudspeaker located within the first vehicle (21) or via a mobile electronic device (15) associated with a user of the first vehicle (21).

10. The method according to any of the preceding claims, wherein the step of calculating the level of the risk parameter additionally takes one or more of the following aspects are taken into account:

  - road width (41) or road lane width (42) at the parking position (24);
  - portion (43) of road width (41) or road lane width (42) that is blocked by the first vehicle (21) at the parking position (24);
  - road speed limit at the parking position (24) and/or on the road stretch leading up to the parking position (24);
  - foggy weather condition at the parking position (24) and/or on the road stretch leading up to the parking position (24);
  - precipitation condition at the parking position (24);
  - sunlight, in particular incident angle of sunlight relative to the orientation of the road stretch leading up to the parking position (24);
  - outdoor light condition at the parking position (24);
  - road grip at the parking position (24);
  - traffic intensity at the parking position (24); and/or
  - vehicle detectability by a driver or driving system of the second, rear-coming, vehicle (22).

11. The method according to any of the preceding claims, further comprising, in response to determined hazardous parking position, when the first vehicle (21) is operating in an autonomous driving mode, controlling the first vehicle (21) to drive away from the parking position (24).

12. The method according to any of the preceding claims, further comprising monitoring vehicle speed and determining that the first vehicle (21) is entering the parking state at a parking position (24) along the roadside when the speed of the first vehicle (21) is lower than a threshold value, in particular when the speed of the first vehicle (21) is zero.

13. A vehicle hazardous parking warning system for warning a user of a first vehicle (21) about hazardous parking of the first vehicle (21), the warning system comprising:

  a first sensor (6) for detecting when the first vehicle (21) enters a parking state at a parking position (24) along the roadside,
  a warning output device (7), in particular a display, light signal device, vibration device, loudspeaker and/or mobile electronic device associated with the user, for outputting a warning signal or warning message, and
  an electronic control system (8) configured for receiving input data from the first sensor and for activating a warning feature by the warning output device for warning the user of the first vehicle (21) about hazardous parking in response to determined hazardous parking position,

  - wherein the warning system further comprises at least one sensor unit (10) associated with the first vehicle (21) or a third vehicle (23), wherein the electronic control system (8) is further configured for determining whether the parking position (24) of the first vehicle (21) is hazardous in terms of risk that the parked first vehicle (21) being hit by a second, rear-coming, vehicle (22) by: retrieving stored sensor data that was registered by the at least one sensor unit (10) associated with the first vehicle (21) or the third vehicle (23) while travelling a road stretch leading up to the parking position (24), wherein the retrieved sensor data reflects visibility of the parking position (24) of the first vehicle (21); calculating a level of a risk parameter reflecting a risk for the parked first vehicle (21) being hit by a second, rear-coming, vehicle (22) based on the retrieved sensor data; and determining that the parking position (24) is a hazardous parking position when said level of said risk parameter exceeds a threshold value, and/or

- wherein the electronic control system (8) is configured for determining whether the parking position (24) of the first vehicle (21) is hazardous in terms of risk that the parked first vehicle (21) being hit by a second, rear-coming, vehicle (22) by: retrieving geographic information identifying areas of dangerous parking, calculating a level of a risk parameter reflecting a risk for the parked first vehicle (21) being hit by a second, rear-coming, vehicle (22) based on the retrieved geographic information and the parking position (24) of the first vehicle (21), and determining that the parking position is a hazardous parking position when said level of said risk parameter exceeds a threshold value.

14. The vehicle hazardous parking warning system according to claim 13, wherein the at least one forwards directed sensor unit (10) is any of, or a combination of, an image sensor unit, a radar sensor unit, a LIDAR sensor unit.

15. A vehicle or a mobile electronic device comprising the warning system according to claim 13 or claim 14.

**FIG.1A**

**FIG.1B**

**FIG.2A**

**FIG.2B**

**FIG.3**

S10

S20

S211

S221

S231

S30

## FIG.4A

Registering forwards
visibility information

Yes    Detecting parking
state    No

Retrieving stored
forwards visibility
information

Calculating level of
risk parameter

Yes    Risk level >
threshold value    No

Activating warning
feature

## FIG.4C

7

9 ← 8 ← 10

6

## FIG.4B

FIG.5A

FIG.5B

VD

HD

FIG.6A

20

19

24

21

26

25

21

FIG.6B

20

19

Pos_1

24

21

25

Pos_2

FIG.6C

20

19

24

27

25

21

Pos_3

FIG.6D

20

19

24

25

21

Pos_4

FIG.6E

20

19

24

S10

S20

S212

S222

S232

S30

**FIG.7A**

**FIG.7B**

Registering sensor data reflecting curvature and slope

Detecting parking state

Yes    No

Retrieving stored sensor data reflecting curvature and slope

Calculating level of risk parameter

Risk level > threshold value

Yes    No

Activating warning feature

**FIG.7C**

S10

S213 — S20

S223

S233

S30

## FIG.8A

7

9 ↔ 8 ← GPS

6

10

## FIG.8B

Detecting parking state — No

Retrieving road map data incl. forwards visibility information or curvature and slope data

Calculating level of risk parameter

Risk level > threshold value
Yes — No

Activating warning feature

## FIG.8C

FIG.9

S10

S214 ⟩— S20

S224

S234

S30

**FIG.10A**

7

9 ⟷ 8 ⟵ GPS

6

10

**FIG.10B**

Detecting parking state — No

Retrieving geographic information identifying areas of dangerous parking

Calculating level of risk parameter

Yes — Risk level > threshold value — No

Activating warning feature

**FIG.10C**

FIG.11

FIG.12

FIG.13

FIG.14

FIG.15

FIG.16

Europäisches
Patentamt

European
Patent Office

Office européen
des brevets

# EUROPEAN SEARCH REPORT

Application Number

EP 20 19 6688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/049812 A1 (BAYERISCHE MOTOREN WERKE AG [DE]; ISERT CARSTEN [CN]) 7 April 2016 (2016-04-07) | 1,6,8,9, 12,13,15 | INV. G08G1/16 G08G1/14 |
| Y | * paragraphs [0016], [0034], [0044] - [0048]; claims 1-15; figures 1-6 * ----- | 2-5,7, 10,11,14 | G08G1/01 |
| Y | US 10 019 904 B1 (CHAN LEO NELSON [US] ET AL) 10 July 2018 (2018-07-10) * columns 20 lines 8-13, 6 lines 40-44, 28 lines 25-38; claims 1-17; figures 1-6 * ----- | 2-5,7, 10,11,14 | |

TECHNICAL FIELDS
SEARCHED (IPC)

G05D
G08G
B60Q
G01C

The present search report has been drawn up for all claims

| Place of search | Date of completion of the search | Examiner |
|---|---|---|
| The Hague | 3 March 2021 | Datondji, Sokèmi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 6688

This annex lists the patent family members relating to the patent documents cited in  the above-mentioned European search report.
The members are as contained in the European Patent Office EDP file on
The European Patent Office is in no way liable for these particulars which are merely given for the purpose of information.

03-03-2021

| Patent document cited in search report | | Publication date | Patent family member(s) | | Publication date |
|---|---|---|---|---|---|
| WO 2016049812 | A1 | 07-04-2016 | CN | 106660482 A | 10-05-2017 |
| | | | EP | 3201047 A1 | 09-08-2017 |
| | | | WO | 2016049812 A1 | 07-04-2016 |
| US 10019904 | B1 | 10-07-2018 | US | 10019904 B1 | 10-07-2018 |
| | | | US | 10204518 B1 | 12-02-2019 |
| | | | US | 10403150 B1 | 03-09-2019 |
| | | | US | 10930158 B1 | 23-02-2021 |

EPO FORM P0459

For more details about this annex : see Official Journal of the European Patent Office, No. 12/82

**EP 3 971 863 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9987981 B1